(19) **Europäisches Patentamt / European Patent Office / Office européen des brevets**

(11) **EP 4 763 892 A1**

(12) **EUROPEAN PATENT APPLICATION**
published in accordance with Art. 153(4) EPC

(43) Date of publication:
24.06.2026 Bulletin 2026/26

(21) Application number: 24872637.4

(22) Date of filing: 02.05.2024

(51) International Patent Classification (IPC):
$C08J\ 5/18^{(2006.01)}$     $C08L\ 77/00^{(2006.01)}$
$C08L\ 71/00^{(2006.01)}$     $C08L\ 29/14^{(2006.01)}$
$C08L\ 29/04^{(2006.01)}$     $C08J\ 7/04^{(2020.01)}$

(52) Cooperative Patent Classification (CPC):
C08J 5/18; C08J 7/04; C08L 29/04; C08L 29/14;
C08L 71/00; C08L 77/00

(86) International application number:
PCT/KR2024/005961

(87) International publication number:
WO 2025/070923 (03.04.2025 Gazette 2025/14)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 26.09.2023 KR 20230129042
26.09.2023 KR 20230129043

(71) Applicant: **Microworks Co., Ltd.**
**Jincheon-gun, Chungcheonbuk-do 27818 (KR)**

(72) Inventors:
• **JANG, Kwangho**
**Suwon-si, Gyeonggi-do 16336 (KR)**
• **CHUNG, Sungjin**
**Suwon-si, Gyeonggi-do 16336 (KR)**
• **HAN, Kweonhyung**
**Suwon-Si, Gyeonggi-do 16336 (KR)**

(74) Representative: **BCKIP Part mbB**
**Landsberger Straße 98**
**80339 München (DE)**

(54) **FILM**

(57) An embodiment relates to a film comprising a polyether block amide copolymer resin; and a polyvinyl acetal resin, wherein a change value in yellowness index dYI of the film exposed during a light exposure time is represented by Equation 1 below, wherein the light has a wavelength of 310 nm and an output of $0.68\ W/m^2$, the exposure time is 120 hours, and the change value in yellowness index is 2 or less.

[Equation 1]

$$dYI = YI\_2 - YI\_1$$

In Equation 1, YI_1 is a yellowness index value of the film before exposure to the light, and YI_2 is a yellowness index value of the film after being exposed to the light for the exposure time.

The film according to the embodiment may maintain excellent optical properties and mechanical properties even when exposed to ultraviolet light for a long period of time.

**Description**

[Technical Field]

The present disclosure relates to a film having excellent mechanical strength and optical properties.

(Cross-Reference to Related Applications)

This application claims priority to Korean Patent Application No. 10-2023-0129042 filed on September 26, 2023, and Korean Patent Application No. 10-2023-0129043 filed on September 26, 2023, the entire contents of which are incorporated herein by reference.

[Background Art]

In order to protect a paint-coated surface applied to an exterior of an automobile and the like, a film laminate including materials such as polyurethane TPU and polyvinyl chloride PVC has conventionally been attached. However, such film laminates of polyurethane, polyvinyl chloride, and the like exhibit significant changes in elastic properties depending on the external environment, particularly temperature variations, during attachment to the paint-coated surface, thereby causing obstacles in installation work. In winter, installation is carried out while separately controlling the temperature of the working area by providing internal air conditioning and local heating devices; however, there are still deficiencies in terms of work convenience, completeness, and quality.

In addition, polyurethane, polyvinyl chloride, and the like have problems such as yellowing originating from the inherent properties of the base material, and thus there is a continuous concern that the exterior color after application to the paint-coated surface may discolor to a degree visually observable by the naked eye. In order to improve such phenomena, attempts have been made to enhance light resistance in a base film, an outermost coating layer of a film laminate, an adhesive layer, and the like; nevertheless, yellowing after application to the paint-coated surface remains problematic.

The background art described above corresponds to technical information possessed by the inventor for deriving the embodiments or acquired in the course of deriving the embodiments, and does not necessarily constitute publicly known prior art disclosed to the general public before the filing of the present invention.

Related prior art includes Korean Laid-Open Patent Publication No. 10-2011-0082893 entitled "Aqueous paint composition for automobile interior" and Korean Laid-Open Patent Publication No. 10-2021-0013842 entitled "Urethane-based film for paint protection film and paint protection film comprising the same."

[Detailed Description of the Invention]

[Technical Problem]

An object of the present disclosure is to provide a film capable of maintaining excellent yellowing resistance and mechanical properties even when exposed to ultraviolet light for a long period of time.

[Technical Solution]

In order to achieve the above object, a film according to one or more embodiments includes i) a polyether block amide copolymer resin; and ii) a polyvinyl acetal resin or a polyvinyl alcohol resin.

A change value in yellowness index dYI of the film exposed during a light exposure time is represented by Equation 1 below, wherein the light has a wavelength of 310 nm and an output of 0.68 W/m$^2$, the exposure time is 120 hours, and the change value in yellowness index is 2 or less.

$$[\text{Equation 1}]$$

$$dYI = YI\_2 - YI\_1$$

In Equation 1, YI_1 is a yellowness index value of the film before exposure to the light, and YI_2 is a yellowness index value of the film after being exposed to the light for the exposure time.

In Equation 1, YI_1 is a yellowness index value of the film before exposure to the light, and YI_2 is a yellowness index value of the film after being exposed to the light for the exposure time.

The light may have a wavelength of 340 nm and an output of 0.72 W/m$^2$, the exposure time may be 1200 hours, and the change value in yellowness index of the film may be 0.3 or less.

The polyvinyl acetal resin or the polyvinyl alcohol resin may include a hydroxyl group in a side chain.

The film may include a plasticizer in an amount of 20 parts by weight or less based on 100 parts by weight in total of the i) polyether block amide copolymer resin and the ii) polyvinyl acetal resin or the polyvinyl alcohol resin.

The film may have a difference in haze value of 1% or less before and after being left in an oven at 60 °C for 7 days.

In order to achieve the above object, a film according to one or more embodiments includes i) a polyether block amide copolymer resin; and ii) a polyvinyl acetal resin or a polyvinyl alcohol resin, and a change value in yellowness index dYI of the film exposed during a light exposure time is represented by Equation 1 below, wherein the light has a wavelength of 340 nm and an output of 0.72 W/m$^2$, the exposure time is 1200 hours, and the change value in yellowness index is 0.3 or less.

$$[Equation\ 1]$$

$$dYI = YI\_2 - YI\_1$$

In Equation 1,

YI_1 is a yellowness index value of the film before exposure to the light, and
YI_2 is a yellowness index value of the film after being exposed to the light for the exposure time.

The film may further include a light absorber in an amount of 5 parts by weight or less based on 100 parts by weight in total of the polyether block amide copolymer resin and the polyvinyl acetal resin.

The film may not exhibit a breaking phenomenon even after being irradiated with UVB light of 310 nm at an output of 0.68 W/m$^2$ for 288 hours.

In order to achieve the above object, a surface protection film according to one or more embodiments includes the film described above. The surface protection film is disposed on a substrate, and the substrate may be one on which a coating layer is formed.

[Effects of the Invention]

The film according to the embodiments may maintain excellent optical properties and mechanical properties even when exposed to ultraviolet light for a long period of time. However, the effects of the embodiments are not limited to the effects described above, and other effects not mentioned above will be clearly understood by those skilled in the art from the following description.

[Mode for Carrying Out the Invention]

Hereinafter, embodiments will be described in detail so that those having ordinary skill in the art to which the embodiments pertain may easily carry out the invention. However, the embodiments may be implemented in various different forms and are not limited to the embodiments described herein.

In the present specification, when a certain component is described as "comprising" another component, unless otherwise stated to the contrary, this does not exclude other components and means that other components may be further included.

In the present specification, when a certain component is described as being "connected" to another component, this includes not only a case in which the components are directly connected, but also a case in which the components are connected with another component interposed therebetween.

In the present specification, a meaning that B is disposed on A means that B is disposed in direct contact with A, or that B is disposed on A with another component interposed therebetween, and is not limited to a case in which B is disposed in direct contact with a surface of A.

In the present specification, the term "combinations thereof" included in a Markush-type expression means one or more mixtures or combinations selected from a group consisting of components described in the Markush-type expression, and means including one or more selected from the group consisting of the components.

In the present specification, the expression "A and/or B" means "A, B, or A and B".

In the present specification, terms such as "first", "second", or "A", "B" are used to distinguish the same terms from each other unless otherwise specified.

In the present specification, a singular expression is interpreted to include a singular or plural meaning as interpreted in context, unless otherwise specified.

In the present specification, room temperature refers to approximately 20 °C, and normal temperature refers to approximately 25 °C.

In the present specification, letters and/or numbers written together with a compound name mean abbreviations of the compound name.

In the present specification, a resin is interpreted to include the resin itself and compounds derived from the resin. For example, a polyether block amide copolymer resin described in the present specification means a polyether block amide copolymer resin and derivatives thereof.

In the present specification, evaluation of a hydroxyl group content was performed by measuring an amount of an ethylene group to which a hydroxyl group of the polyvinyl acetal resin is incorporated, according to a method in conformity with JIS K6728.

Sunlight, as natural light, includes not only visible light but also infrared light, ultraviolet light, and the like. Ultraviolet light contained in sunlight and reaching the surface of the earth is classified into UVA Ultraviolet A having a wavelength of 315 nm to 400 nm and UVB Ultraviolet B having a wavelength of 280 nm to 315 nm. The UVA and UVB are high-energy rays having short wavelengths. When such rays are irradiated onto a film, photochemical reactions may occur to generate free radicals or to bond surface molecules. Depending on the extent, such reactions may cause surface hardening and cracking in a polymer material of the film, thereby causing concerns such as degradation of material strength and changes in yellowness.

The inventors of the embodiments have confirmed, as a result of applying various methods, that changes in yellowness can be substantially suppressed by mixing a polyvinyl acetal resin, which is a heterogeneous resin, together with a polyether block amide copolymer resin to form a film, and thus present this as an embodiment.

Hereinafter, the embodiments will be described in more detail.

Optical Properties of Film

In order to achieve the above object, a film according to an embodiment includes a polyether block amide copolymer resin; and a polyvinyl acetal resin.

A change value in yellowness index dYI of the film exposed during a light exposure time is represented by Equation 1 below.

$$[\text{Equation 1}]$$

$$dYI = YI\_2 - YI\_1$$

In Equation 1,

YI_1 is a yellowness index value of the film before exposure to the light, and
YI_2 is a yellowness index value of the film after being exposed to the light for the exposure time.

The change value in yellowness index dYI of the film may be 2 or less when the light has a wavelength of 310 nm and an output of 0.68 $W/m^2$ and the exposure time is 120 hours.

Specifically, the change value in yellowness index dYI of the film may be 2 or less, 1.8 or less, 1.5 or less, 1 or less, or 0.5 or less when the light has a wavelength of 310 nm and an output of 0.68 $W/m^2$ and the exposure time is 120 hours. The change value in yellowness index of the film may be -1 or more.

The change value in yellowness index dYI of the film may be 2.2 or less when the light has a wavelength of 310 nm and an output of 0.68 $W/m^2$ and the exposure time is 168 hours.

Specifically, the change value in yellowness index dYI of the film may be 2.2 or less, 2 or less, 1.5 or less, 1 or less, 0.8 or less, or 0.6 or less when the light has a wavelength of 310 nm and an output of 0.68 $W/m^2$ and the exposure time is 168 hours. The change value in yellowness index of the film may be -1 or more.

The change value in yellowness index dYI of the film may be 4 or less when the light has a wavelength of 310 nm and an output of 0.68 $W/m^2$ and the exposure time is 336 hours. The change value in yellowness index of the film may be -1 or more.

Specifically, the change value in yellowness index dYI of the film may be 4 or less, 3.5 or less, 3 or less, 2.5 or less, 2 or less, 1.5 or less, 1 or less, or 0.6 or less when the light has a wavelength of 310 nm and an output of 0.68 $W/m^2$ and the exposure time is 336 hours. The change value in yellowness index of the film may be -1 or more.

The change value in yellowness index dYI of the film may be 5 or less when the light has a wavelength of 310 nm and an output of 0.68 $W/m^2$ and the exposure time is 672 hours.

Specifically, the change value in yellowness index dYI of the film may be 5 or less, 4.5 or less, 4 or less, 3.5 or less, 3 or less, 2.5 or less, 2 or less, 1.5 or less, 1 or less, or 0.4 or less when the light has a wavelength of 310 nm and an output of 0.68 W/m$^2$ and the exposure time is 672 hours. The change value in yellowness index of the film may be -1 or more.

Such a film may maintain excellent optical properties for a long period of time since a change in yellowness is not significant even when exposed to UVB for a long time. In addition, durability and quality of a product to which the film is applied may be improved.

The change value in yellowness index dYI of the film may be 1 or less when the light has a wavelength of 340 nm and an output of 0.72 W/m$^2$ and the exposure time is 1,200 hours.

Specifically, the change value in yellowness index dYI of the film may be 1 or less, 0.3 or less, or 0.25 or less when the light has a wavelength of 340 nm and an output of 0.72 W/m$^2$ and the exposure time is 1,200 hours. The change value in yellowness index of the film may be -1 or more.

Such a film may maintain excellent optical properties for a long period of time since a change in yellowness is not significant even when exposed to UVA for a long time. In addition, durability and quality of a product to which the film is applied may be improved.

The film may have a yellowness of 2.15 or less after being exposed for 336 hours to light having a wavelength of 310 nm and an output of 0.68 W/m$^2$. The yellowness may be -1 or more.

The film may have a yellowness of 1.8 or less after being exposed for 672 hours to light having a wavelength of 310 nm and an output of 0.68 W/m$^2$. The yellowness may be -1 or more.

The film may have a yellowness of 1.6 or less after being exposed for 336 hours to light having a wavelength of 340 nm and an output of 0.72 W/m$^2$. The yellowness may be -1 or more.

The film may have a yellowness of 1.7 or less or 1.6 or less after being exposed for 672 hours to light having a wavelength of 340 nm and an output of 0.72 W/m$^2$. The yellowness may be -1 or more.

The film may have a yellowness of 1.7 or less, 1.6 or less, or 1.55 or less after being exposed for 1,200 hours to light having a wavelength of 340 nm and an output of 0.72 W/m$^2$. The yellowness may be -1 or more.

A phenomenon in which aging progresses in a film to cause surface hardening and cracking in a polymer material, thereby resulting in loss of elasticity and tearing, is referred to as a breaking phenomenon. Specifically, phenomena such as tearing of the film and cracked surfaces visible to the naked eye may be observed.

The film may not exhibit a breaking phenomenon even after being irradiated with UVB light of 310 nm at an output of 0.68 W/m$^2$ for 288 hours using a QUV weathering tester manufactured by Q-LAB. Such a film may maintain excellent mechanical properties for a long period of time since a breaking phenomenon does not occur even when exposed to UVB for a long time, and durability and quality of a product to which the film is applied may be improved.

When a polyether block amide copolymer resin is applied alone to a film, a phenomenon in which haze increases may be observed when the film is exposed to air for a long period of time in a high-temperature and high-humidity environment. As a result of repeated tests, the inventors determined that the phenomenon occurs due to migration of unreacted polyether monomers or oligomers within the film.

In order to suppress such haze changes, the inventors have confirmed, as a result of applying various methods, that haze changes can be substantially suppressed by mixing a heterogeneous resin including a polyvinyl acetal resin together with a polyether block amide copolymer resin as in the embodiments to form a film.

The film may have a haze value of 3% or less at room temperature. Specifically, the film may have a haze value of 2.5% or less or 2% or less at room temperature. The film may have a haze value of 0% or more or 0.1% or more at room temperature. When the film is manufactured to have such haze values, transparency at a level applicable to an optical film may be secured.

The film may have a haze value of 3% or less after being left at 60 °C for 7 days. Specifically, the film may have a haze value of 2.5% or less or 2% or less after being left at 60 °C for 7 days. The film may have a haze value of 0% or more or 0.1% or more after being left at 60 °C for 7 days.

The film may have a difference in haze value of 1% or less before and after being left at 60 °C for 7 days. Specifically, the film may have a difference in haze value of 0.5% or less, 0.3% or less, 0.1% or less, 0.05% or less, 0.01% or less, or 0.001% or less before and after being left at 60 °C for 7 days. The film may have a difference in haze value of 0% or more or 0.0001% or more before and after being left at 60 °C for 7 days. In this case, even when the film is exposed for a long period of time to a film application environment at a relatively high temperature compared to room temperature, a change in haze value is small, thereby minimizing degradation of optical performance.

Composition of Film

The film comprises i) a polyether block amide copolymer resin; and ii) a polyvinyl acetal resin or a polyvinyl alcohol resin.

The polyether block amide copolymer resin may include a polyamide region and a polyether region. The polyamide region may include a semi-crystalline region and may exhibit relatively rigid characteristics. The polyether region may include an amorphous region and may exhibit relatively flexible characteristics. The polyamide region and the polyether region may be disposed at an appropriate level within a polymer chain of the film, thereby providing a film having both excellent mechanical strength and flexibility.

The polyether block amide copolymer may be a condensation polymer obtained by condensing a polyether block including reactive end groups and a polyamide block including reactive end groups.

The polyether block amide copolymer may be one in which a polyamide including two or more carboxyl groups within a molecule and a polyether including two or more hydroxyl groups within a molecule are incorporated to each other.

The polyether block amide copolymer may be a condensation polymer including a polyamide block having dicarboxyl end groups and a polyoxyalkylene block having diamine end groups. The polyoxyalkylene block may be obtained by subjecting an aliphatic $\alpha,\omega$-dihydroxylated polyoxyalkylene block, known as a polyether diol, to a cyanoethylation reaction and a hydrogenation reaction.

The polyether block amide copolymer may be a condensation polymer including a polyamide block having dicarboxyl end groups and a polyether diol block. In this case, the polyether block amide is a polyether ester amide.

By way of example, a polyamide block having dicarboxyl chain ends may include a condensation polymer of a polyamide precursor in the presence of a chain-limiting dicarboxylic acid. By way of example, a polyamide block having diamine chain ends may include a condensation polymer of a polyamide precursor in the presence of a chain-limiting diamine.

By way of example, a polyamide block having dicarboxyl chain ends may include a condensation polymer of an $\alpha,\omega$-aminocarboxylic acid, a lactam, or a dicarboxylic acid and a diamine in the presence of a chain-limiting dicarboxylic acid. As the polyamide block, polyamide 12 or polyamide 6 may be applied.

The polyether block amide copolymer may include blocks having randomly distributed unit structures. By way of example, the following three types of polyamide blocks may be applied.

As a first type, the polyamide block may include a condensation polymer of a dicarboxylic acid and an aliphatic or araliphatic diamine. The dicarboxylic acid may have 4 to 20 carbon atoms or may have 6 to 18 carbon atoms. The aliphatic or araliphatic diamine may have 2 to 20 carbon atoms or may have 6 to 14 carbon atoms.

The dicarboxylic acid may be, for example, 1,4-cyclohexanedicarboxylic acid, 1,2-cyclohexyldicarboxylic acid, 1,4-butanedioic acid, adipic acid, azelaic acid, suberic acid, sebacic acid, 1,12-dodecanedicarboxylic acid, 1,14-tetradecanedicarboxylic acid, 1,18-octadecanedicarboxylic acid, terephthalic acid, isophthalic acid, naphthalenedicarboxylic acid, a dimerized fatty acid, or the like.

The diamine may be, for example, 1,5-tetramethylenediamine, 1,6-hexamethylenediamine, 1,10-decamethylenediamine, 1,12-dodecamethylenediamine, trimethyl-1,6-hexamethylenediamine, 2-methyl-1,5-pentamethylenediamine, isomers of bis(3-methyl-4-aminocyclohexyl)methane (BMACM), 2,2-bis(3-methyl-4-aminocyclohexyl)propane (BMACP), bis(para-aminocyclohexyl)methane (PACM), isophoronediamine (IPD), 2,6-bis(aminomethyl)norbornane (BAMN), piperazine (Pip), meta-xylylenediamine (MXD), para-xylylenediamine (PXD), or the like.

The first type of the polyamide block may include PA 412, PA 414, PA 418, PA 610, PA 612, PA 614, PA 618, PA 912, PA 1010, PA 1012, PA 1014, PA 1018, MXD6, PXD6, MXD10, or PXD10.

The second type of the polyamide block may include a condensation polymer of one or more $\alpha,\omega$-aminocarboxylic acids and/or one or more lactams having 6 to 12 carbon atoms, in the presence of a dicarboxylic acid or a diamine having 4 to 12 carbon atoms.

Examples of the lactam include caprolactam, oenantholactam, and lauryllactam. Examples of the $\alpha,\omega$-aminocarboxylic acid include aminocaproic acid, 7-aminoheptanoic acid, 11-aminoundecanoic acid, and 12-aminododecanoic acid.

The second type of the polyamide block may include polyamide 11, polyamide 12, or polyamide 6.

The third type of the polyamide block may include a condensation polymer of one or more $\alpha,\omega$-aminocarboxylic acids (or one or more lactams), one or more diamines, and one or more dicarboxylic acids. In this case, the polyamide block may be prepared by condensation polymerization of a diamine, a diacid, and a comonomer or comonomers as described below.

As the diamine, for example, a linear aliphatic diamine, an aromatic diamine, or a diamine having X carbon atoms may be applied. As the diacid, for example, a dicarboxylic acid or an acid having Y carbon atoms may be applied. The comonomer or comonomers {Z} may be selected from a lactam having Z carbon atoms, an $\alpha,\omega$-aminocarboxylic acid, and a mixture including one or more diamines having X1 carbon atoms and one or more dicarboxylic acids having Y1 carbon atoms in substantially equimolar amounts, provided that (X1 and Y1) are different from (X and Y).

The comonomer or comonomers {Z} may be included in an amount of 50 wt% or less, 20 wt% or less, or 10 wt% or less based on a total amount of polyamide precursor monomers constituting the polyamide block.

The condensation reaction according to the third type may be carried out in the presence of a chain-limiting agent selected from dicarboxylic acids. As the chain-limiting agent, a dicarboxylic acid having Y carbon atoms may be used, and the dicarboxylic acid may be introduced in a stoichiometrically excessive amount relative to the one or more diamines.

As an alternative form of the third type, the polyamide block may optionally include, in the presence of a chain-limiting agent, a condensation polymer of two or more $\alpha,\omega$-aminocarboxylic acids having 6 to 12 carbon atoms, or two or more lactams, or lactams and aminocarboxylic acids having different numbers of carbon atoms.

The aliphatic $\alpha,\omega$-aminocarboxylic acid may be, for example, aminocaproic acid, 7-aminoheptanoic acid, 11-aminoundecanoic acid, 12-aminododecanoic acid, or the like.

The lactam may be, for example, caprolactam, oenantholactam, lauryllactam, or the like.

The aliphatic diamine may be, for example, hexamethylenediamine, dodecamethylenediamine, trimethylhexamethylenediamine, or the like.

The alicyclic diacid may be, for example, 1,4-cyclohexanedicarboxylic acid.

The aliphatic diacid may be, for example, butanedioic acid, adipic acid, azelaic acid, suberic acid, sebacic acid, dodecanedicarboxylic acid, a dimerized fatty acid (having a dimerization ratio of 98% or more; hydrogenated; those sold under the trade name Pripol by Uniqema or under the trade name Empol by Henkel), a polyoxyalkylene-$\alpha,\omega$-diacid, or the like.

The aromatic diacid may be, for example, terephthalic acid, isophthalic acid, or the like.

The alicyclic diamine may be, for example, isomers of bis(3-methyl-4-aminocyclohexyl)methane (BMACM) and 2,2-bis(3-methyl-4-aminocyclohexyl)propane (BMACP), bis(para-aminocyclohexyl)methane (PACM), or the like.

The diamine may be, for example, isophoronediamine (IPD), 2,6-bis(aminomethyl)norbornane (BAMN), piperazine, or the like. Examples of araliphatic diamine include, but are not limited to, meta-xylylenediamine (MXD) and para-xylylenediamine (PXD).

Examples of the third type of the polyamide block include PA 66/6 and PA 66/610/11/12. In PA 66/6, "66" represents a hexamethylenediamine unit condensed with adipic acid, and "6" represents a unit introduced by condensation of caprolactam.

In PA 66/610/11/12, "66" represents a hexamethylenediamine unit condensed with adipic acid, "610" represents a hexamethylenediamine unit condensed with sebacic acid, "11" represents a unit introduced by condensation of aminoundecanoic acid, and "12" represents a unit introduced by condensation of lauryllactam.

The polyether block may be selected from, for example, one or more polyalkylene ether polyols, particularly polyalkylene ether diols, such as polyethylene glycol (PEG), polypropylene glycol (PPG), polytrimethylene glycol (PO3G), polytetramethylene glycol (PTMG), and mixtures or copolymers thereof. The polyether block may include a polyoxyalkylene sequence having $NH_2$ chain ends, and the sequence may be introduced by cyanoacetylation of an aliphatic $\alpha,\omega$-dihydroxylated polyoxyalkylene sequence known as a polyether diol. Specifically, Jeffamine (for example, Jeffamine® D400, D2000, ED2003, or XTJ542 commercially available from Huntsman) may be used.

The one or more polyether blocks may preferably include one or more polyethers selected from polyalkylene ether polyols such as PEG, PPG, PO3G, and PTMG, polyethers including $NH_2$ at chain ends and including polyoxyalkylene sequences, copolymers thereof having random arrangements and/or block arrangements (ether copolymers), and mixtures thereof.

The polyether block may be generated from any one of polyethylene glycol, polypropylene glycol, polytetramethylene glycol, and combinations thereof.

The polyether block may be copolymerized with a polyamide block having carboxyl end groups to form a polyether block amide. The polyether block may be aminated to be converted into a polyether diamine and then condensed with a polyamide block having carboxyl end groups to form a polyether block amide. The polyether block may be mixed with a polyamide precursor and a chain-limiting agent to form a polyether block amide including statistically distributed units.

Examples of the polyether include polyethylene glycol (PEG), polypropylene glycol (PPG), and polytetramethylene glycol (PTMG). Polytetramethylene glycol is also known as polytetrahydrofuran (PTHF). The polyether block may be introduced into a polyether block amide chain from a diol form or a diamine form, and the polyether block is referred to as a PEG block, a PPG block, or a PTMG block, respectively.

A number-average molecular weight of the polyamide block may be 300 g/mol to 15,000 g/mol or 600 g/mol to 5,000 g/mol. A number-average molecular weight of the polyether block may be 100 g/mol to 6,000 g/mol or 200 g/mol to 3,000 g/mol.

A ratio of the number-average molecular weight of the polyamide block to that of the polyether block in the polyether block amide copolymer may be 1:0.25 to 1, and the number-average molecular weights of the polyamide block and the polyether block of the copolymer may be 1,000/1,000, 1,300/650, 2,000/1,000, 2,600/650, or 4,000/1,000, respectively.

A content of the polyether block based on a total weight of the polyether block amide copolymer may be 10 wt% or more. The content may be 40 wt% or more. The content may be 60 wt% or more. The content may be 80 wt% or less.

A content of the polyamide block based on the total weight of the polyether block amide copolymer may be 20 wt% or more. The content may be 40 wt% or more. The content may be 90 wt% or less. The content may be 60 wt% or less.

A film having such characteristics may have elasticity and hardness controlled simultaneously. Accordingly, excellent long-term durability may be imparted to the film, and a coated surface may be stably protected from external impacts.

The contents may be interpreted as being statistically distributed within a polymer chain.

Examples of the polyether block amide copolymer include Pebax® and Pebax® Rnew® manufactured by Arkema, and VESTAMID® E manufactured by Evonik, but are not limited thereto.

The polyvinyl acetal resin or the polyvinyl alcohol resin includes hydroxyl groups in side chains.

The polyvinyl acetal resin or the polyvinyl alcohol resin may have a degree of polymerization of 3,500 or less.

The polyvinyl acetal resin or the polyvinyl alcohol resin having a low degree of polymerization may be applied to formation of a coating layer, and that having a degree of polymerization of a certain level or more may be applied to film formation by extrusion or the like. By way of example, in the embodiments, the resin is applied by being mixed with the polyether block amide copolymer resin. In the embodiments, both a resin having a low degree of polymerization and a resin having a degree of polymerization of a certain level or more may be applied.

The polyvinyl acetal resin may be obtained by reacting to polyvinyl alcohol and an aldehyde.

By way of example, the polyvinyl alcohol resin may have a degree of polymerization of 200 to 3,500. Alternatively, the polyvinyl acetal resin may be obtained by acetalizing a polyvinyl alcohol resin having a degree of polymerization of 200 to 3,500 with an aldehyde.

By way of example, the polyvinyl alcohol resin may have a degree of polymerization of 1,600 to 3,000. Alternatively, the polyvinyl acetal resin may be obtained by acetalizing a polyvinyl alcohol resin having a degree of polymerization of 1,600 to 3,000 with an aldehyde.

By way of example, the polyvinyl alcohol resin may have a degree of polymerization of 1,700 to 2,500. Alternatively, the polyvinyl acetal resin may be obtained by acetalizing a polyvinyl alcohol resin having a degree of polymerization of 1,700 to 2,500 with an aldehyde.

When such a resin is applied to a film, mechanical properties of the film may be sufficiently improved.

The aldehyde may be selected from the group consisting of n-butyl aldehyde, isobutyl aldehyde, n-valeraldehyde, 2-ethylbutyl aldehyde, n-hexyl aldehyde, and blends thereof. When n-butyl aldehyde is applied as the aldehyde, a polyvinyl butyral resin produced therefrom may have a refractive index similar to that of glass, thereby exhibiting excellent optical characteristics.

The polyvinyl acetal resin or the polyvinyl alcohol resin includes hydroxyl groups in side chains. A hydroxyl group content in the polyvinyl acetal resin or the polyvinyl alcohol resin may be 2 wt% or more, 5 wt% or more, 8 wt% or more, 10 wt% or more, 15 wt% or more, 16 wt% or more, or 19 wt% or more. In addition, the hydroxyl group content in the polyvinyl acetal resin or the polyvinyl alcohol resin may be 60 wt% or less, 50 wt% or less, 40 wt% or less, or 30 wt% or less.

The polyvinyl acetal resin may have an acetyl group content of 0.01 wt% or more, 1.5 wt% or more, 3 wt% or more, 5 wt% or more, or 10 wt% or more. In addition, the polyvinyl acetal resin may have an acetyl group content of 20 wt% or less, 15 wt% or less, or 12 wt% or less.

When a resin having such characteristics is applied, compatibility with a plasticizer to be described below may be enhanced, and degradation of optical performance of the film due to haze changes may be effectively suppressed. This is considered to be because hydroxyl groups disposed in side chains help suppress migration of unreacted polyether monomers or oligomers, thereby suppressing haze change.

In the film, a ratio of ii) a total amount of the polyvinyl acetal resin and the polyvinyl alcohol resin, i) based on 1 part by weight of the polyether block amide copolymer resin, may be 2.5 parts by weight or less. Specifically, the ratio may be 2.5 parts by weight or less, 2.3 parts by weight or less, 2 parts by weight or less, 1.8 parts by weight or less, 1.6 parts by weight or less, 1.5 parts by weight or less, 1 part by weight or less, 0.67 parts by weight or less, or 0.5 parts by weight or less, based on 1 part by weight of the polyether block amide copolymer resin. The film may include, based on 1 part by weight of the polyether block amide copolymer resin, a total amount of the polyvinyl acetal resin and the polyvinyl alcohol resin of 0.001 parts by weight or more, 0.01 parts by weight or more, 0.1 parts by weight or more, 0.2 parts by weight or more, or 0.3 parts by weight or more.

When the film is prepared with such a ratio, migration of unreacted polyether may be minimized, thereby helping to effectively suppress degradation of optical performance of the film due to haze changes.

The film may further include a plasticizer. The film includes a plasticizer in the amounts described below based on 100 parts by weight of a base resin composed of i) the polyether block amide copolymer resin and ii) the polyvinyl acetal resin and the polyvinyl alcohol resin.

Based on 100 parts by weight of the base resin, the plasticizer may be included in an amount of 0.1 parts by weight or more, 0.3 parts by weight or more, 0.5 parts by weight or more, or 1 part by weight or more. In addition, based on 100 parts by weight of the base resin, the plasticizer may be included in an amount of 20 parts by weight or less, 17 parts by weight or less, 15 parts by weight or less, or 10 parts by weight or less.

The plasticizer may be applied at a predetermined ratio based on the content of the polyvinyl acetal resin. The plasticizer may be included in an amount of 1 part by weight or more, 5 parts by weight or more, 8 parts by weight or more, 10 parts by weight or more, 12 parts by weight or more, or 15 parts by weight or more based on 100 parts by weight of the polyvinyl acetal resin. In addition, the plasticizer may be included in an amount of 50 parts by weight or less, 40 parts by weight or less, 35 parts by weight or less, or 30 parts by weight or less based on 100 parts by weight of the polyvinyl acetal resin.

The plasticizer may be mixed together with the polyether block amide copolymer resin, the polyvinyl acetal resin, and/or the polyvinyl alcohol resin. In this case, dispersibility may be further improved.

The plasticizer may be first mixed with the polyvinyl acetal resin and then mixed with the polyether block amide copolymer resin.

Specifically, as the plasticizer, one selected from the group consisting of triethylene glycol bis(2-ethylhexanoate) (3G8), tetraethylene glycol diheptanoate (4G7), triethylene glycol bis(2-ethylbutyrate) (3GH), triethylene glycol bis(2-heptanoate) (3G7), dibutoxyethoxyethyl adipate (DBEA), butyl carbitol adipate (DBEEA), dibutyl sebacate (DBS), bis(2-hexyl) adipate (DHA), and combinations thereof may be applied. More specifically, one selected from the group consisting of triethylene glycol di-2-ethylbutyrate, triethylene glycol di-2-ethylhexanoate, triethylene glycol di-n-heptanoate, and combinations thereof may be included, and even more specifically, triethylene glycol bis(2-ethylhexanoate) (3G8) may be applied. Such plasticizers exhibit excellent compatibility with the polyvinyl acetal resin and may simultaneously improve workability and optical performance.

The film may include a light absorber. According to the embodiments, by adjusting a content of the light absorber included in the film, degradation of optical properties and mechanical properties of the film due to ultraviolet exposure may be effectively reduced. In addition, migration of the light absorber within the film may be suppressed, and an excessive increase in yellowness of the film may be prevented.

The film may include the light absorber in an amount of 0.05 to 5 parts by weight based on 100 parts by weight of the base resin. The film may include the light absorber in an amount of 0.08 parts by weight or more, 0.1 parts by weight or more, or 0.2 parts by weight or more based on 100 parts by weight of the base resin. The film may include the light absorber in an amount of 5 parts by weight or less, 3 parts by weight or less, or 2 parts by weight or less based on 100 parts by weight of the base resin. In this case, yellowing and hardening rates of the film may be effectively delayed. In addition, migration of the light absorber may be suppressed, thereby suppressing contamination of the appearance of the film.

The light absorber may include one selected from the group consisting of a benzotriazole-based compound, an oxanilide-based compound, a hydroxybenzophenone-based compound, a hydroxyphenyl triazine-based compound, a benzoic acid ester-based compound, and combinations thereof. Such compounds may exhibit excellent compatibility with the polyether block amide copolymer resin and may effectively absorb ultraviolet light to stably prevent degradation of the film.

By way of example, Tinuvin 234, Tinuvin 312, Tinuvin 329, Tinuvin P, Tinuvin 1130, Tinuvin 326, Tinuvin 327, Tinuvin 328, Tinuvin 571, Tinuvin 99-DW, Tinuvin 1600, and Tinuvin 1577 manufactured by BASF may be applied as the light absorber.

The film may further include additives commonly applied in the film field. Examples of the additives include a lubricant, an antiblocking agent, a thermal stabilizer, an antistatic agent, and an impact modifier.

A thickness of the film may be 1,000 $\mu$m or less. Specifically, the thickness of the film may be 500 $\mu$m or less, 250 $\mu$m or less, or 150 $\mu$m or less. The thickness of the film may be 1 $\mu$m or more, 10 $\mu$m or more, 20 $\mu$m or more, 30 $\mu$m or more, 40 $\mu$m or more, or 50 $\mu$m or more, or may be 100 $\mu$m or more. When the film is manufactured to have such a thickness, a thin and lightweight film having excellent impact resistance and low haze may be provided.

The film according to the embodiments may be an extruded film. In the case of an extruded film, mass production is relatively easy, and formation of a laminated film further including other layers is possible. When manufactured as an extruded film, thickness control of the film is relatively easy, and compared to a casting method, it is advantageous to manufacture a relatively thick film having well-controlled thickness overall. By way of example, a thickness of the extruded film may be 80 $\mu$m or more, 90 $\mu$m or more, or 100 $\mu$m or more.

The film according to the embodiments may be a film further including a plasticizer. The plasticizer allows adjustment of a modulus of the film. Specifically, a film including a plasticizer may have a reduced modulus, thereby improving workability of a surface protection film.

Use of the Film

The film may be a surface protection film.

The surface protection film may be applied to automobiles, aircraft, electronic products, furniture, and the like (hereinafter referred to as articles). The article may include a painted surface on which at least a part of a coating material is applied. The surface protection film may be attached to the painted surface to perform a function of protecting the article so that the coating is not peeled off.

The surface protection film may be disposed on a substrate. Accordingly, the substrate may be prevented from being exposed to the outside. In this case, the substrate refers to at least a part of the article.

The substrate may be one on which a coating layer is formed. The surface protection film may be disposed on the substrate on which the coating layer is formed. Accordingly, the coating layer may be prevented from being exposed to the outside, thereby preventing damage to the coating layer.

A method for manufacturing the film may employ a conventional film manufacturing method. By way of example, the film may be manufactured by an extrusion method, but is not limited thereto. Specifically, a composition corresponding to the film composition may be introduced into an extruder, mixed and extruded, and sheeted using a casting roll or the like to manufacture the film according to the embodiments.

Hereinafter, the invention will be described in more detail through specific examples. The following examples are merely provided to facilitate understanding of the invention, and the scope of the invention is not limited thereto.

**Preparation Example: Preparation of Film**

Example 1: As a polyether block amide copolymer resin composition, PEBAX® 40R53 (containing about 46 wt% of PA11 residues as amide residues and about 54 wt% of polytetramethylene glycol residues) was applied in an amount of 69.1 parts by weight. The PEBAX® 40R53 is a commercially available polyether block amide resin and is abbreviated as 40R53. The resin was obtained from Arkema France and applied. As a polyvinyl acetal resin composition, polyvinyl butyral resin (PVB) having a hydroxyl group content of 20.3 wt%, a butyral group content of 78.9 wt%, and an acetyl group content of 0.8 wt% was prepared by introducing polyvinyl alcohol having a degree of polymerization of 1700 and a saponification degree of 99, and n-butyl aldehyde, followed by a conventional synthesis process, and was applied in an amount of 25.8 parts by weight. A plasticizer, triethylene glycol bis(2-ethylhexanoate) (3G8), was applied in an amount of 4.2 parts by weight. In addition, Tinuvin 1600 manufactured by BASF was applied as a light absorber in an amount of 0.9 parts by weight. The polyether block amide copolymer resin composition, the polyvinyl acetal resin composition, and the light absorber were mixed and melt-extruded using an extruder owned by SK Microworks to prepare a film. The films were stored with PET protective films disposed on both surfaces thereof.

Example 2: In Example 1, PEBAX® 35R53 (containing about 31 wt% of PA11 residues as amide residues and about 69 wt% of polytetramethylene glycol residues) was applied as the polyether block amide copolymer resin composition. The PEBAX® 35R53 is a commercially available polyether block amide resin and is abbreviated as 35R53. The resin was obtained from Arkema France and applied. Other contents are shown in Table 1 below.

Examples 3 and 4 were prepared in the same manner as Example 1 using the compositions and contents shown in Table 1 below.

Comparative Example 1: A film was prepared in the same manner as in Example 1, except that the polyether block amide copolymer resin composition 40R53 was applied in an amount of 100 parts by weight and PVB was not included.

Comparative Example 2: A commercially available thermoplastic polyurethane film (TPU film), Argotec 49510 manufactured by SWM, was purchased and applied.

Manufacturing process conditions for the Examples and Comparative Examples are shown in Table 1 below.

**Evaluation Example: Measurement** of Yellowness **and Haze Changes**

The yellowness of the films of the Examples and Comparative Examples was measured based on ASTM E313 in a D65/10 mode.

Thereafter, the films were irradiated with UVB light having a wavelength of 310 nm at an output of 0.68 W/m$^2$ using a QUV weathering tester manufactured by Q-Lab. The yellowness of the films was measured according to cumulative irradiation time. The method for measuring the yellowness after light irradiation was the same as that applied for measurement before light irradiation.

From the measured values, YI_1, YI_2, and a difference value dYI were calculated.

In addition, the films were irradiated with UVA light having a wavelength of 340 nm at an output of 0.72 W/m$^2$ using a QUV weathering tester manufactured by Q-Lab. The yellowness of the films was measured according to cumulative irradiation time. The method for measuring the yellowness after light irradiation was the same as that applied for measurement before light irradiation.

From the measured values, YI_1, YI_2, and a difference value dYI were calculated.

In addition, haze of the samples was measured using a haze meter in accordance with ASTM D1003. The haze of the films was measured according to cumulative irradiation time. The method for measuring the haze after light irradiation was the same as that applied for measurement before light irradiation. From the measured values, a difference in haze value before and after being left at 60 °C for 7 days was calculated.

Measurement results for the Examples and Comparative Examples are disclosed in Tables 2 to 5 below.

**Evaluation Example: Measurement of Yellowness and Haze Changes**

The films of the Examples and Comparative Examples were irradiated with UVB-313 EL light at an output of 0.68 W/m$^2$ using a UVB lamp G15T82 manufactured by SANKYO DENKI. A breaking phenomenon of the films was observed according to cumulative irradiation time.

Measurement results for the Examples and Comparative Examples are disclosed in Table 6 below.

[Table 1]

| Composition | Example 1 | Example 2 | Example 3 | Example 4 | Comparative Example 1 |
|---|---|---|---|---|---|
| 40R53 (parts by weight) | 69.1 | - | 34.55 | 69.5 | 99.1 |
| 35R53 (parts by weight) | - | 69.1 | 34.55 | | - |
| PVB (parts by weight) | 25.8 | 25.8 | 25.8 | 25.8 | - |
| Plasticizer (parts by weight) | 4.2 | 4.2 | 4.2 | 4.2 | - |
| Light absorber 1 (parts by weight) | 0.9 | 0.9 | 0.9 | 0.5 | 0.9 |

[Table 2]

| | YI_1* | YI_2 | | | |
|---|---|---|---|---|---|
| UVB Exposure time (hr) | 0 | 120 | 168 | 336 | 672 |
| Example 1 | 1.74 | 1.80 | 1.91 | 1.81 | 1.70 |
| Example 2 | 2.11 | 2.13 | 2.21 | 2.13 | 1.75 |
| Example 3 | 2.08 | 2.13 | 2.21 | 2.13 | 1.91 |
| Example 4 | 1.17 | 1.41 | 1.48 | 1.59 | 1.35 |
| Comparative Example 1 | 1.48 | 2.02 | 2.13 | 2.18 | 1.89 |
| Comparative Example 2 | 0.53 | 2.69 | 3.20 | 4.81 | 6.50 |
| * YI_1 is a yellowness index value of the film before light irradiation. | | | | | |

[Table 3]

| | dYI* | | | |
|---|---|---|---|---|
| UVB Exposure time (hr) | 120 | 168 | 336 | 672 |
| Example 1 | 0.06 | 0.17 | 0.07 | -0.04 |
| Example 2 | 0.02 | 0.10 | 0.02 | -0.36 |
| Example 3 | 0.05 | 0.13 | 0.05 | -0.17 |
| Example 4 | 0.24 | 0.31 | 0.42 | 0.12 |
| Comparative Example 1 | 0.54 | 0.65 | 0.70 | 0.41 |
| Comparative Example 2 | 2.16 | 2.43 | 4.28 | 5.97 |
| * dYI = YI_2 - YI_1 | | | | |

[Table 4]

| | YI_1 | YI_2 | | | |
|---|---|---|---|---|---|
| UVA Exposure time (hr) | 0 | 120 | 336 | 672 | 1200 |
| Example 1 | 1.74 | 1.53 | 1.53 | 1.58 | 1.52 |
| Example 2 | 2.08 | 1.63 | 1.58 | 1.59 | 1.51 |
| Example 3 | 1.92 | 1.61 | 1.54 | 1.56 | 1.57 |
| Example 4 | 1.50 | 1.58 | 1.63 | 1.74 | 1.71 |
| Comparative Example 1 | 1.41 | 1.56 | 1.67 | 1.78 | 1.75 |

(continued)

| | YI_1 | YI_2 | | | |
|---|---|---|---|---|---|
| Comparative Example 2 | 0.54 | 0.64 | 0.96 | 1.51 | 1.69 |
| * YI_1 is a yellowness index value of the film before light irradiation. | | | | | |

[Table 5]

| | dYI* | | | |
|---|---|---|---|---|
| UVA Exposure time (hr) | 120 | 336 | 672 | 1200 |
| Example 1 | -0.21 | -0.21 | -0.16 | -0.22 |
| Example 2 | -0.45 | -0.50 | -0.49 | -0.57 |
| Example 3 | -0.31 | -0.38 | -0.36 | -0.35 |
| Example 4 | 0.08 | 0.13 | 0.24 | 0.21 |
| Comparative Example 1 | 0.15 | 0.26 | 0.37 | 0.34 |
| Comparative Example 2 | 0.10 | 0.42 | 0.97 | 1.15 |
| * dYI = YI_2 - YI_1 | | | | |

[Table 5]

| | Example 1 | Example 2 | Example 3 | Example 4 | Comparative Example 1 | Comparative Example 2 |
|---|---|---|---|---|---|---|
| Breaking phenomenon occurrence | X | X | X | X | O | X |

Referring to Tables 2 and 3, Examples 1 to 4 and Comparative Example 1 exhibited dYI values of 1 or less, whereas Comparative Example 2 exhibited a value exceeding 1. This indicates that the films of the Examples exhibited superior yellowing resistance not only compared to the urethane-based film of Comparative Example 2, but also compared to a film to which a polyether block amide copolymer single resin was applied.

Referring to Tables 4 and 5, the results of the Examples were superior to those of the Comparative Examples also in durability under ultraviolet light having different wavelengths.

Referring to Table 6, in a durability test using UVB, the samples of the Examples did not exhibit a breaking phenomenon, whereas Comparative Example 1 exhibited a breaking phenomenon. Although the polyurethane film of Comparative Example 2 also did not exhibit a breaking phenomenon, it exhibited insufficient properties in terms of a yellowness change rate, as described above.

Although preferred embodiments of the present invention have been described in detail above, the scope of the present invention is not limited thereto, and various modifications and improvements by those skilled in the art using the basic concept of the present invention as defined in the following claims also fall within the scope of the present invention.

**Claims**

1. A film, comprising:

   i) a polyether block amide copolymer resin; and
   ii) a polyvinyl acetal resin or a polyvinyl alcohol resin,
   wherein a change value in yellowness index dYI of the film exposed during a light exposure time is represented by Equation 1 below,
   wherein the light has a wavelength of 310 nm and an output of 0.68 W/m$^2$, the exposure time is 120 hours, and the change value in yellowness index is 2 or less;

[Equation 1]

$$dYI = YI\_2 - YI\_1$$

In Equation 1,

YI_1 is a yellowness index value of the film before exposure to the light, and
YI_2 is a yellowness index value of the film after being exposed to the light for the exposure time.

2. The film of claim 1,
wherein the light has a wavelength of 340 nm and an output of 0.72 W/m$^2$, the exposure time is 1,200 hours, and the change value in yellowness index is 0.3 or less.

3. The film of claim 1,
wherein the polyvinyl acetal resin or the polyvinyl alcohol resin includes hydroxyl groups in side chains.

4. The film of claim 1,
wherein the film includes a plasticizer in an amount of 20 parts by weight or less based on 100 parts by weight in total of the i) polyether block amide copolymer resin and the ii) polyvinyl acetal resin or the polyvinyl alcohol resin.

5. The film of claim 1,
wherein a difference in haze value before and after being left in an oven at 60 °C for 7 days is 1% or less.

6. A film comprising:

i) a polyether block amide copolymer resin; and
ii) a polyvinyl acetal resin or a polyvinyl alcohol resin,
wherein a change value in yellowness index dYI of the film exposed during a light exposure time is represented by Equation 1 below,
wherein the light has a wavelength of 340 nm and an output of 0.72 W/m$^2$, the exposure time is 1,200 hours, and the change value in yellowness index is 0.3 or less.

[Equation 1]

$$dYI = YI\_2 - YI\_1$$

In Equation 1,

YI_1 is a yellowness index value of the film before exposure to the light, and
YI_2 is a yellowness index value of the film after being exposed to the light for the exposure time.

7. The film of claim 6,
wherein the film further includes a light absorber in an amount of 5 parts by weight or less based on 100 parts by weight in total of the polyether block amide copolymer resin and the polyvinyl acetal resin.

8. The film of claim 6,
wherein the film does not exhibit a breaking phenomenon even after being irradiated with UVB light of 310 nm at an output of 0.68 W/m$^2$ for 288 hours.

9. A surface protection film,

wherein the film according to claim 1 or claim 6 is disposed on a substrate, and
wherein the substrate is one on which a coating layer is formed.

## INTERNATIONAL SEARCH REPORT

International application No.

**PCT/KR2024/005961**

### A. CLASSIFICATION OF SUBJECT MATTER

**C08J 5/18**(2006.01)i; **C08L 77/00**(2006.01)i; **C08L 71/00**(2006.01)i; **C08L 29/14**(2006.01)i; **C08L 29/04**(2006.01)i; **C08J 7/04**(2006.01)i

According to International Patent Classification (IPC) or to both national classification and IPC

### B. FIELDS SEARCHED

Minimum documentation searched (classification system followed by classification symbols)

C08J 5/18(2006.01); B29D 7/01(2006.01); B32B 27/08(2006.01); B32B 7/12(2006.01); C08J 5/00(2006.01); C08L 29/04(2006.01); C08L 53/02(2006.01); C08L 77/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 필름(film), 폴리비닐알코올(polyvinyl alcohol), 황색도(yellowness indexes), 폴리비닐아세탈(polyvinyl acetal)

### C. DOCUMENTS CONSIDERED TO BE RELEVANT

| Category* | Citation of document, with indication, where appropriate, of the relevant passages | Relevant to claim No. |
|---|---|---|
| X | JP 2016-183240 A (NIPPON SYNTHETIC CHEM. IND. CO., LTD.) 20 October 2016 (2016-10-20)<br>See claims 1-8; and paragraphs [0006], [0018]-[0023], [0046] and [0058]. | 1-6,8 |
| Y | | 7,9 |
| Y | KR 10-2010-0099308 A (KURARAY CO., LTD.) 10 September 2010 (2010-09-10)<br>See claim 1; and paragraphs [0002], [0082], [0085] and [0101]-[0106]. | 7,9 |
| A | KR 10-2023-0018950 A (SK MICROWORKS SOLUTIONS CO., LTD. et al.) 07 February 2023 (2023-02-07)<br>See entire document. | 1-9 |
| A | KR 10-2286935 B1 (SKC CO., LTD. et al.) 06 August 2021 (2021-08-06)<br>See entire document. | 1-9 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 August 2024** | **07 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/005961** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-1752027 B1 (KURARAY CO., LTD.) 28 June 2017 (2017-06-28)<br>See entire document. | 1-9 |

**INTERNATIONAL SEARCH REPORT**
Information on patent family members

International application No.

**PCT/KR2024/005961**

| Patent document cited in search report | | | Publication date (day/month/year) | Patent family member(s) | | | Publication date (day/month/year) |
|---|---|---|---|---|---|---|---|
| JP | 2016-183240 | A | 20 October 2016 | None | | | |
| KR | 10-2010-0099308 | A | 10 September 2010 | CN | 101945943 | A | 12 January 2011 |
| | | | | CN | 101945943 | B | 09 July 2014 |
| | | | | JP | 2011-081877 | A1 | 06 May 2011 |
| | | | | KR | 10-1571655 | B1 | 25 November 2015 |
| | | | | US | 10385202 | B2 | 20 August 2019 |
| | | | | US | 2010-0273012 | A1 | 28 October 2010 |
| | | | | WO | 2009-081877 | A1 | 02 July 2009 |
| KR | 10-2023-0018950 | A | 07 February 2023 | KR | 10-2677189 | B1 | 21 June 2024 |
| KR | 10-2286935 | B1 | 06 August 2021 | None | | | |
| KR | 10-1752027 | B1 | 28 June 2017 | CN | 102834439 | A | 19 December 2012 |
| | | | | CN | 102834439 | B | 23 March 2016 |
| | | | | JP | 2013-132592 | A1 | 18 July 2013 |
| | | | | JP | 5638533 | B2 | 10 December 2014 |
| | | | | KR | 10-2013-0051934 | A | 21 May 2013 |
| | | | | WO | 2011-132592 | A1 | 27 October 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230129042
- KR 1020230129043
- KR 1020110082893
- KR 1020210013842